# EUROPEAN PATENT APPLICATION

(11) **EP 3 530 982 A1**
(43) Date of publication of application: **28.08.2019**
(21) Application number: 19154380.0
(22) Date of filing: 30.01.2019
(51) Int. Cl.: F16H 3/14, F16H 25/18

(54) **POWER TRANSFER MECHANISM EQUIPPED WITH BIDIRECTIONAL RAMP AND ADAPTED FOR USE WITH CONTINUOUSLY VARIABLE TRANSMISSION**

(30) Priority: 23.02.2018 TW 107106094
(71) Applicant: Motive Power Industry Co., Ltd., Dacun Township, Changhua County 515 (TW)
(72) Inventor: CHENG, Hsin-Lin, 515 Dacun Township, Changhua County (TW)
(74) Representative: Perani & Partners S.p.A.

(57) **Abstract**

A power transfer mechanism with bidirectional ramps and is for use with a continuously variable transmission, including a first rotor having first troughs arranged annularly, each having two first arcuate ramps connected and curved with curvature centered at a center of the first rotor; a second rotor having second troughs arranged annularly, each having two second arcuate ramps connected and curved with curvature centered at a center of the second rotor; a ring having rollers and a positioning ring, the positioning ring having positioning portions for positioning the rollers in place, respectively, the ring being disposed between the first rotor and the second rotor and being disposed between each of the first troughs and a corresponding one of the second troughs. The power transfer mechanism transfers power from the continuously variable transmission's power input side to power output side, and from power output side to power input side.

## Description

### FIELD OF THE INVENTION

The present disclosure relates to a power transfer mechanism equipped with bidirectional ramps and adapted for use with a continuously variable transmission and, more particularly, to a power transfer mechanism for transferring power from a power input side of a continuously variable transmission to a power output side of the continuously variable transmission and transferring power from the power output side of the continuously variable transmission to the power input side of the continuously variable transmission.

### BACKGROUND OF THE INVENTION

Taiwan patent TWI518270 discloses a clamp mechanism for use with a continuously variable transmission. However, the clamp mechanism transfers power by a trough of a single ramp, and thus the power can only be transferred unidirectionally from a power input side of the continuously variable transmission to a power output side of the continuously variable transmission. Furthermore, Taiwan patent TWI571576 discloses a power transfer mechanism for use with a continuously variable transmission. However, the power transfer mechanism transfers power by a teardrop-shaped trough; as a result, power transfer mechanism can only unidirectionally transfer the power from a power input side of the continuously variable transmission to a power output side of the continuously variable transmission.

Therefore, it is imperative to provide a power transfer mechanism equipped with bidirectional ramps and adapted for use with a continuously variable transmission, so as to not only transfer power from a power input side of the continuously variable transmission to a power output side of the continuously variable transmission, but also transfer power from the power output side of the continuously variable transmission to the power input side of the continuously variable transmission.

### SUMMARY OF THE INVENTION

In view of the aforesaid drawbacks of the prior art, it is an objective of the present disclosure to provide a power transfer mechanism equipped with bidirectional ramps and adapted for use with a continuously variable transmission, so as to not only transfer power from a power input side of the continuously variable transmission to a power output side of the continuously variable transmission, but also transfer power from the power output side of the continuously variable transmission to the power input side of the continuously variable transmission.

The present disclosure provides a power transfer mechanism equipped with bidirectional ramps and adapted for use with a continuously variable transmission, comprising: a first rotor having a plurality of first troughs arranged annularly, each having two first arcuate ramps connected in a head-on, smooth manner, and each being curved with its curvature centered at a center of the first rotor; a second rotor having a plurality of second troughs arranged annularly, each having two second arcuate ramps connected in a head-on, smooth manner, and each being curved with its curvature centered at a center of the second rotor; and a ring having a plurality of rollers and a positioning ring, the positioning ring having a plurality of positioning portions for positioning the rollers in place, respectively, the ring being disposed between the first rotor and the second rotor and being disposed between each of the first troughs and a corresponding one of the second troughs.

In an embodiment of the present disclosure, the first arcuate ramps of the first troughs are each bilaterally symmetrical in the circumferential direction, and the second arcuate ramps of the second troughs are each bilaterally symmetrical in the circumferential direction.

In an embodiment of the present disclosure, the second rotor has a power transfer annular surface facing away from the second troughs and being in contact with a plurality of transmission balls of the continuously variable transmission.

Therefore, the power transfer mechanism equipped with bidirectional ramps and adapted for use with a continuously variable transmission according to the present disclosure transfers power from the continuously variable transmission's power input side to power output side, and from power output side to power input side.

### BRIEF DESCRIPTION OF THE DRAWINGS

FIG. 1 is a schematic view of a power transfer mechanism equipped with bidirectional ramps and adapted for use with a continuously variable transmission according to a specific embodiment of the present disclosure; and
FIG. 2 is a schematic view of a second rotor according to a specific embodiment of the present disclosure.

### DETAILED DESCRIPTION OF THE PREFERRED EMBODIMENTS

Objectives, features, and advantages of the present disclosure are hereunder illustrated with specific embodiments, depicted with drawings, and described below.

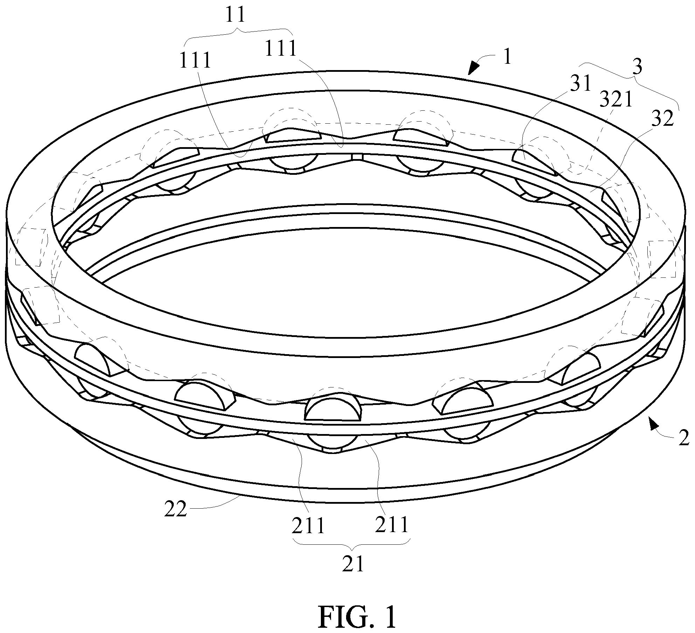

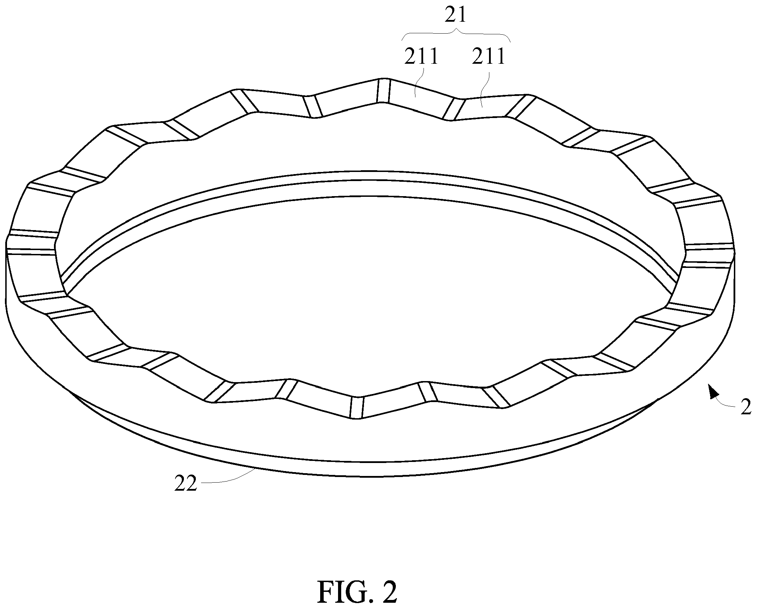

Referring to FIG. 1 and FIG. 2, the present disclosure provides a power transfer mechanism equipped with bidirectional ramps and adapted for use with a continuously variable transmission, comprising a first rotor 1, a second rotor 2 and a ring 3. As shown in FIG. 2, the second rotor 2 is annular and has a plurality of second troughs 21. The second troughs 21 are arranged annularly. The second troughs 21 each have two second arcuate ramps 211 connected in a head-on, smooth manner. The second troughs 21 are each curved with its curvature centered at the center of the second rotor 2. As shown in FIG. 1 and FIG. 2, the first rotor 1 is identical to the second rotor 2, annular, and has a plurality of first troughs 11. The first troughs 11 are arranged annularly. The first troughs 11 each have two first arcuate ramps 111 connected in a head-on, smooth manner. The first troughs 11 are each curved with its curvature centered at the center of the first rotor 1. The ring 3 has a plurality of rollers 31 and a positioning ring 32. The positioning ring 32 has a plurality of positioning portions 321 for positioning the rollers 31 in place, respectively. The positioning portions 321 are positioning holes (or positioning recesses). The ring 3 is disposed between the first rotor 1 and the second rotor 2. The first troughs 11 face the second troughs 21, respectively. The first troughs 11 correspond in shape and size to the second troughs 21. The rollers 31 are each disposed between a corresponding one of the first troughs 11 and a corresponding one of the second troughs 21.

Referring to FIG. 1 and FIG. 2, the power transfer mechanism equipped with bidirectional ramps and adapted for use with a continuously variable transmission according to the present disclosure is applicable to a power input side (not shown) and a power output side (not shown) of the continuously variable transmission (in a manner as disclosed in Taiwan patent TWI571576). The power input side can be connected to an engine of a gasoline-powered car (or a motor of an electric car). The power output side can be connected to wheels of a gasoline-powered car (or an electric car). As soon as the driver turns on the throttle of the gasoline-powered car (or the electric door of the electric car), power generated from the engine (or motor) is transferred from the power input side of the continuously variable transmission to the power output side of the continuously variable transmission to drive the wheels to rotate. This is followed by separation of the first troughs 11 from the second troughs 21; hence, the rollers 31 move from the first troughs 11 and the second troughs 21 to the first arcuate ramps 111 on the left (or right) and the second arcuate ramps 211 on the right (or left). As a result, a power transfer annular surface 22 of the second rotor 2 clamps a plurality of transmission balls (not shown) of the continuously variable transmission. When the gasoline-powered car (or electric car) has its throttle (or electric door) turned off while traveling on a flat road or down a slope, power generated from the wheels is transferred from the power output side of the continuously variable transmission to the power input side of the continuously variable transmission to drive the engine (or motor); at this point in time, the rollers 31 return to the first trough 11 and the second trough 21 from the first arcuate ramps 111 on the left (or right) and the second arcuate ramps 211 on the right (or left). Afterward, the rollers 31 move to the first arcuate ramps 111 on the right (or left) and the second arcuate ramps 211 on the left (or right) such that the power transfer annular surface 22 of the second rotor 2 clamps the transmission balls. Therefore, the power transfer mechanism equipped with bidirectional ramps and adapted for use with a continuously variable transmission according to the present disclosure not only transfers power from the power input side of the continuously variable transmission to the power output side of the continuously variable transmission, but also transfers power f rom the power output side of the continuously variable transmission to the power input side of the continuously variable transmission such that the engine of the gasoline-powered car can effectuate a break or the motor of the electric car can regain power and effectuate an auxiliary break. Hence, the power transfer mechanism equipped with bidirectional ramps and adapted for use with a continuously variable transmission according to the present disclosure is more advantageous than Taiwan patents TWI518270 and TWI571576.

Referring to FIG. 1 and FIG. 2, the first arcuate ramps 111 of the first troughs 11 are each bilaterally symmetrical in the circumferential direction, so is each second arcuate ramp 211.

Referring to FIG. 1 and FIG. 2, the second rotor 2 has a power transfer annular surface 22. The power transfer annular surface 22 faces away from the second troughs 21. The power transfer annular surface 22 is in contact with the transmission balls (not shown) of the continuously variable transmission. A torsion spring (not shown) is disposed between the first rotor 1 and the second rotor 2 such that the first rotor 1 and the second rotor 2 rotate and return to initial positions relative to each other. Alternatively, an extension spring (not shown) is disposed between the first rotor 1 and the second rotor 2 such that the first rotor 1 and the second rotor 2 move axially and return to initial positions relative to each other.

The present disclosure is disclosed above by preferred embodiments. However, persons skilled in the art should understand that the preferred embodiments are illustrative of the present disclosure only, but shall not be interpreted as restrictive of the scope of the present disclosure. Hence, all equivalent modifications and replacements made to the aforesaid embodiments shall fall within the scope of the present disclosure. Accordingly, the legal protection for the present disclosure shall be defined by the appended claims.

## Claims

1. A power transfer mechanism equipped with bidirectional ramps and adapted for use with a continuously variable transmission, comprising:
a first rotor (1) having a plurality of first troughs (11) arranged annularly, each having two first arcuate ramps (111) connected in a head-on, smooth manner, and each being curved with its curvature centered at a center of the first rotor (1);
a second rotor (2) having a plurality of second troughs (21) arranged annularly, each having two second arcuate ramps (211) connected in a head-on, smooth manner, and each being curved with its curvature centered at a center of the second rotor (2); and
a ring (3) having a plurality of rollers (31) and a positioning ring, the positioning ring having a plurality of positioning portions for positioning the rollers (31) in place, respectively, the ring (3) being disposed between the first rotor (1) and the second rotor (2) and being disposed between each of the first troughs (11) and a corresponding one of the second troughs (21).

2. The power transfer mechanism equipped with bidirectional ramps and adapted for use with a continuously variable transmission according to claim 1, wherein the first arcuate ramps (111) of the first troughs (11) are each bilaterally symmetrical in the circumferential direction, and the second arcuate ramps (211) of the second troughs (21) are each bilaterally symmetrical in the circumferential direction.

3. The power transfer mechanism equipped with bidirectional ramps and adapted for use with a continuously variable transmission according to claim 1, wherein the second rotor (2) has a power transfer annular surface (22) facing away from the second troughs (21) and being in contact with a plurality of transmission balls of the continuously variable transmission.
